# NEUE EUROPÄISCHE PATENTSCHRIFT

(11) **EP 1 686 668 B2**
(45) Veröffentlichungstag und Bekanntmachung des Hinweises auf die Entscheidung über den Einspruch: **31.05.2017**
(45) Hinweis auf die Patenterteilung: 28.12.2011
(21) Anmeldenummer: 06000482.7
(22) Anmeldetag: 11.01.2006
(51) Int. Cl.: H02G 3/08

(54) **Verfahren zur Herstellung von Elektroinstallationsmaterial**
Manufacturing process for electrical installation apparatus
Méthode de fabrication de matériel d'installation électrique.

(30) Priorität: 29.01.2005 DE 102005004239
(43) Veröffentlichungstag der Anmeldung: 02.08.2006
(73) Patentinhaber: Fohs, Winfried, 66440 Blieskastel (DE)
(72) Erfinder: Fohs, Winfried, 66440 Blieskastel (DE)
(74) Vertreter: Wieske, Thilo

(56) Entgegenhaltungen:
- EP-A- 0 653 825
- EP-A- 1 363 376
- DE-A1- 3 915 007
- DE-U- 1 961 334
- DE-U1- 9 312 476
- FR-A- 2 126 194
- FR-A- 2 881 288
- US-A- 5 814 766

## Beschreibung

Die Erfindung betrifft ein Verfahren zur Herstellung von Elektroinstallationsmaterial nach dem Oberbegriff des Patentanspruchs 1.

Es ist bereits derartiges Installationsmaterial bekannt, bei dem beispielsweise bei Hohlwandinstallationsdosen Kabeleinführungsöffnungen mit einem vergleichsweise weichen Kunststoff ausgespritzt werden. Es ist dadurch möglich, bei der Montage die Kabel durch den weichelastischen Kunststoff hindurch zu stoßen, ohne zunächst eine Fläche einer vordefinierten Größe entlang einer Sollbruchlinie aus dem Gehäuse ausbrechen zu müssen. Die Kabel werden nach dem Durchstoßen des weichelastischen Kunststoffs von diesem umschlossen. Dadurch werden besonders vorteilhaft bei der Hohlwandinstallation Probleme mit Zugluft und Schallübertragung gelöst. Weiterhin wird durch das Umschließen der Kabel durch den weichelastischen Kunststoff erreicht, dass die Kabel nach dem Einführen der Kabel in die Hohlwandinstallationsdose zumindest für die Zwecke der Montage gehalten werden und nicht unkontrolliert nach dem Einführen vor der Verbindung mit anderen Kabeln oder Bauteilen wieder heraus fallen können. Diese beschriebenen Elemente werden also aus zwei Kunststoffen hergestellt, die verschiedene Elastizitäten aufweisen.

Der vorliegenden Erfindung liegt die Aufgabe zu Grunde, ein Verfahren vorzuschlagen, mit dem eine Kennzeichnung der Produkte in fertigungstechnisch einfacher Weise realisiert werden kann.

Diese Aufgabe wird nach der vorliegenden Erfindung gelöst durch ein Verfahren zur Herstellung von Elementen aus Kunststoff für die Elektroinstallation, wobei die Elemente als Gehäuse dienen für die Verbindung von elektrischen Kabeln und/oder den Anschluss von elektrotechnischen oder elektronischen Bauteilen an Kabel, wobei die Kabel durch Kabeleinführungsöffnungen in das Gehäuseinnere einführbar sind, wobei die Oberfläche der Elemente Kennzeichnungen enthält, die Prüfzeichen, Qualitätszeichen oder Produktbezeichnungen, insbesondere Marken und/oder Kennzeichen für die Logistik der Produkte sind. Nach der vorliegenden Erfindung wird in einem ersten Arbeitsschritt in einem Spritzvorgang das Gehäuse aus einem ersten Kunststoff hergestellt. In einem zweiten Arbeitsschritt werden den Kennzeichnungen in ihrer Struktur entsprechende Vertiefungen in der Oberfläche des Gehäuses mit einem zweiten Kunststoff durch einen Spritzvorgang ausgefüllt.

Dadurch kann vorteilhaft durch den Herstellungsprozess der Elemente unmittelbar die Kennzeichnung realisiert werden. Die Vertiefungen können in Ihrer Struktur beispielsweise Prüfzeichen entsprechen oder Qualitätszeichen oder Produktbezeichnungen wie beispielsweise Marken oder auch Kennzeichen, die für die Logistik der entsprechenden Produkte benötigt werden. Diese Kennzeichen können die sogenannten EAN-Codes sein, die für die Lagerhaltung und an elektronischen Kassen mittels Laserscannern lesbar sind.

Vorteilhaft müssen diese Kennzeichnungen nicht mehr in einem separaten Vorgang aufgedruckt werden oder aufgeklebt werden. Vielmehr lässt sich das Aufbringen dieser Kennzeichnungen in den Herstellungsprozess integrieren.

Durch dieses Verfahren entsteht also ein Element für die Elektroinstallation, das aus zwei Kunststoffkomponenten besteht, wobei das Element selbst aus dem ersten Kunststoff hergestellt wird, wobei Vertiefungen in dem Element mit dem zweiten Kunststoff ausgefüllt sind.

Bei der Ausgestaltung nach Anspruch 2 weist der zweite Kunststoff eine Einfärbung auf, die einen farblichen Kontrast zu dem ersten Kunststoff darstellt.

Dadurch wird vorteilhaft die Lesbarkeit und Erkennbarkeit der Kennzeichnungen verbessert. Dies gilt sowohl für automatische Lesegeräte wie beispielsweise Strichcodelesegeräte, mit denen EAN-Codes erfasst werden sollen wie auch für andere Pröduktbezeichnungen wie beispielsweise Marken, die vom Kunden direkt erfasst werden sollen.

Bei diesem Verfahren ergibt sich also ein Element bei dem die zwei Kunststoffkomponenten einen guten farblichen Kontrast zueinander aufweisen.

Bei der Ausgestaltung des Verfahrens nach Anspruch 3 weist der zweite Kunststoff gegenüber dem ersten Kunststoff eine größere Elastizität auf. Mit dem zweiten Kunststoff werden in dem zweiten Arbeitsschritt auch Öffnungen verschlossen, die bei der Herstellung des Gehäuses in dem ersten Arbeitsschritt als Kabeleinführungsöffnungen frei gelassen wurden.

Vorteilhaft wird also bei dem Spritzvorgang im zweiten Arbeitsschritt sowohl die bereits bekannte technische Funktion erreicht, dass die Kabeleinführungsöffnungen mit einem weichen Kunststoff verschlossen sind, als auch das Auffüllen der Vertiefungen in der Oberfläche. Diese Kombination erweist sich fertigungstechnisch als besonders günstig, weil dann bei einem ohne erfolgenden Arbeitsschritt, mit dem die Kabeleinführungsöffhungen verschlossen werden, ohne wesentliche Mehraufwand eine zusätzlich Funktionalität erreicht werden kann, die ein nachfolgendes Bedrucken der Elemente nicht mehr erforderlich macht.

Bei diesem Verfahren wird also ein Element hergestellt, das aus den beiden Kunststoffkomponenten besteht, wobei bei dem aus dem ersten Kunststoff hergestellten Element nicht nur die Vertiefungen mit dem zweiten Kunststoff ausgefüllt werden sondern bei dem auch die Öffnungen für die Kabeleinführungen in dem aus dem ersten Kunststoff hergestellten Element mit dem zweiten Kunststoff verschlossen werden.

Bei der Ausgestaltung nach Anspruch 4 werden die Vertiefungen in der Oberfläche des Gehäuses in dem ersten Arbeitsschritt unmittelbar beim Spritzvorgang hergestellt.

Dabei können vorteilhaft vor der Produktion die Werkzeuge zur Herstellung der Elemente entsprechend eingerichtet werden, dass die Vertiefungen beim Spritzvorgang erzeugt werden. Gegenüber einem Zwischenarbeitsschritt, bei dem zwischen dem ersten Arbeitsschritt und dem zweiten Arbeitsschritt die Vertiefungen erst in die Oberfläche eingebracht werden müssen, ergibt sich dadurch eine Vereinfachung der Produktion.

Anspruch 5 betrifft eine Ausgestaltung, bei der die Elemente aus mehreren Einzelteilen bestehen, wobei die Einzelteile nach deren Herstellung in dem ersten Arbeitsschritt in dem zweiten Arbeitsschritt mit dem zweiten Kunststoff miteinander verbunden werden.

Diese Einzelteile können beispielsweise bei einer Abzweigdose ein Grundgehäuse sein, das durch eine Bodenplatte mit Seitenwänden gebildet wird, sowie ein Deckel, der nach erfolgtem Kabelanschluss zum Verschließen des Grundgehäuses verwendet wird. Vorteilhaft werden diese Einzelteile miteinander verbunden, so dass beim Gebrauch dieser Elemente in der Elektroinstallation, speziell bei der Montage dieser Elemente, die Einzelteile nicht verloren werden.

Besonders vorteilhaft zeigt sich hierbei in der Rückbeziehung auf Anspruch 3, dass wiederum in einem Arbeitsschritt, nämlich dem Spritzvorgang des zweiten Kunststoffs andere Funktionalitäten mit realisiert werden können. Gerade der zum Verschließen der Kabeleintrittsöffnungen verwendete weichelastische Kunststoff erweist sich für die Herstellung eines Verbindungselements zwischen einem Grundteil und einem Deckel als besonders vorteilhaft. Dieser Kunststoff weist auch bei mehrmaligem Öffnen und Schließen des Deckels eine hinreichende Bruchfestigkeit und Elastizität auf, die zum einen eine lange Lebensdauer wie auch eine einfache Handhabung ermöglicht.

Es ist ersichtlich, dass die besondere Art der Verbindung zweier Einzelteile, die gemeinsam ein Element bilden, derzeit zwar als rückbezogener Anspruch formuliert ist, dass diese Vorgehensweise aber auch unabhängig von den Maßnahmen, die in den anderen Ansprüchen beschrieben sind, für sich allein realisiert werden kann. Dies bezüglich wird die Einreichung einer Teilanmeldung ausdrücklich vorbehalten.

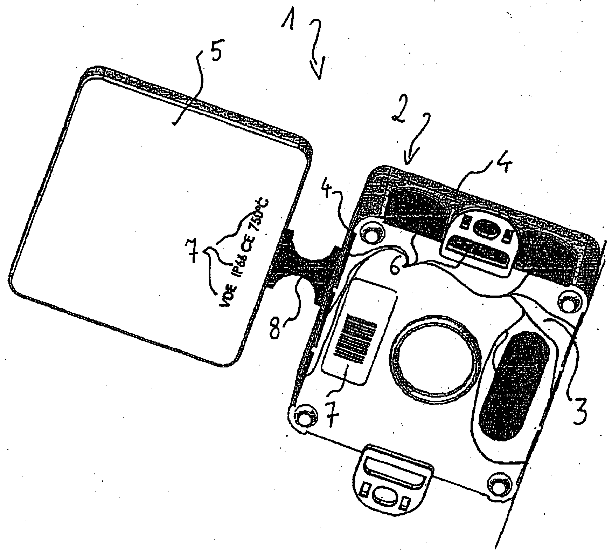

Die einzige Figur zeigt ein Element 1 aus Kunststoff für die Elektroinstallation. Dieses Element 1 ist in dem dargestellten Ausführungsbeispiel eine Abzweigdose bzw. Kabelanschlussdose für die Aufputzmontage.

Das Element 1 besteht aus einem Grundteil 2 mit einer Bodenplatte 3 und Seitenwänden 4 sowie einem weiteren Teil 5, das als Deckel ausgebildet ist.

Das Grundteil 2 weist im Bereich der Bodenplatte 3 sowie im Bereich der Seitenwände 4 Kabeleintrittsöffnungen 6 auf, die mit einem weichelastischen Kunststoff verschlossen sind. Dieser weichelastische Kunststoff wird in einem zweiten Arbeitsschritt durch einen Spritzvorgang angebracht, nachdem in einem ersten Arbeitsschritt das Grundteil 2 aus einem ersten Kunststoff hergestellt wurde, der gegenüber dem zweiten Kunststoff eine größere Steifigkeit aufweist. In diesem ersten Arbeitsschritt werden die Kabeleintrittsöffnungen 6 offen gelassen.

Weiterhin ist im Bereich der Bodenplatte 3 wie auch im Bereich des Deckels 5 zu sehen, dass Vertiefungen 7 in dem zweiten Arbeitsschritt ebenfalls mit dem weichelastischen Kunststoff ausgespritzt wurden. In der Bodenplatte 3 entsprechen die Vertiefungen einem EAN-Code, der mit entsprechenden Lesegeräten ausgelesen werden kann und der logistischen Handhabung der entsprechenden Produkte dient. Weiterhin ist zu sehen, dass die Vertiefungen 7 im Bereich des Deckels 5 allgemeinen Prüfzeichen sowie Verwendungshinweisen entsprechen wie beispielsweise der IP-Schutzklasse sowie der Maximaltemperatur.

Diese Anbringung der entsprechenden Informationen hat den weiteren Vorteil, dass die zur logistischen Handhabung verwendeten Informationen auf der Unterseite der Bodenplatte angebracht sind, so dass diese Informationen nach der Verwendung und der Montage des entsprechenden Elementes nicht mehr sichtbar sind. Weiterhin erweist es sich hierbei als vorteilhaft, dass der Kassiervoigang beschleunigt wird, weil mit der Zeit durch die konsequente Anbringung dieser logistischen Informationen an derselben Stelle das Verkaufspersonal an der Kasse den EAN-Code nicht mehr lange suchen muss, wie dies beispielsweise bei Aufklebern der Fall ist, die beim Einsortieren in das Regal an beliebiger Stelle auf dem Produkt angebracht sein können.

Die Informationen, die auch nach der Montage des Elementes noch sichtbar sein sollen, sind vorteilhaft auf der Außenseite des Deckels angebracht, so dass diese auch nach der Montage noch sichtbar sind. Außer den technischen Informationen kann es sich hierbei auch um herstelleridentifizierende Bezeichnungen handeln wie beispielsweise eingetragene Marken, Logos oder ähnliches.

Vorteilhaft erweist es sich beim Anbringen der Informationen, wenn der zweite Kunststoff gegenüber dem ersten Kunststoff einen farblichen Kontrast aufweist. Damit werden die Informationen zum einen für den Verbraucher leichter lesbar. Weiterhin können die Informationen dann von Lesegeräten leichter erfasst werden.

Es ist ersichtlich, dass die Anbringung der Informationen auch bei solchen Elementen erfolgen kann, bei denen die Kabeleintrittsöffnungen nicht mit dem weichelastischen Kunststoff verschlossen sind sondern aus Ausbrechflächen bestehen.

Weiterhin ist in der Figur noch ein Verbindungselement 8 zu sehen, das ebenfalls in dem zweiten Arbeitsschritt aus dem weichelastischen Kunststoff hergestellt wird. Mit diesem Verbindungselement 8 werden das Grundteil 2 und der Deckel 5 miteinander verbunden. Dadurch können vorteilhaft Grundteil 2 und Deckel 5 bei der Montage nicht verloren gehen. Auch hier ist ersichtlich, dass dieses Verbindungselement 8 ebenfalls auch unabhängig von dem Ausspritzen von Kabeleintrittsöffnungen mit dem weichelastischen Kunststoff sowie auch unabhängig von dem Ausfüllen von Vertiefungen 7 mit dem weichelastischen Kunststoff angebracht werden kann.

Als besonders vorteilhaft erweise sich die Kombination beim Anspritzen mehrere Funktionalitäten im zweiten Arbeitsschritt, weil dadurch vorteilhaft Aufwand und Kosten durch ansonsten notwendige mehrere einzelne Arbeitsschritte gespart werden können.

## Patentansprüche

1. Verfahren zur Herstellung von Elementen (1) aus Kunststoff für die Elektroinstallation, wobei die Elemente (1) als Gehäuse dienen für die Verbindung von elektrischen Kabeln und/oder den Anschluss von elektrotechnischen oder elektronischen Bauteilen an Kabel, wobei die Kabel durch Kabeleinführungsöffnungen (6) in das Gehäuseinnere einführbar sind, wobei die Oberfläche der Elemente (1) Kennzeichnungen enthält, die Prüfzeichen, Qualitätszeichen oder Produktbezeichnungen sind, insbesondere Marken und/oder Kennzeichen für die Logistik der Produkte,
**dadurch gekennzeichnet, dass** in einem ersten Arbeitsschritt in einem Spritzvorgang das Gehäuse (2, 5) aus einem ersten Kunststoff hergestellt wird und dass in einem zweiten Arbeitsschritt den Kennzeichnungen in ihrer Struktur entsprechende Vertiefungen (7) in der Oberfläche des Gehäuses (2, 5) mit einem zweiten Kunststoff durch einen Spritzvorgang ausgefüllt werden.

2. Verfahren nach Anspruch 1,
**dadurch gekennzeichnet, dass** der zweite Kunststoff eine Einfärbung aufweist, die einen farblichen Kontrast zu dem ersten Kunststoff darstellt.

3. Verfahren nach Anspruch 1 oder 2,
**dadurch gekennzeichnet, dass** der zweite Kunststoff gegenüber dem ersten Kunststoff eine größere Elastizität aufweist und dass mit dem zweiten Kunststoff in dem zweiten Arbeitsschritt auch Öffnungen (6) verschlossen werden, die bei der Herstellung des Gehäuses (2, 5) in dem ersten Arbeitsschritt als Kabeleinführungsöffnungen frei gelassen wurden.

4. Verfahren nach einem der vorher gehenden Ansprüche,
**dadurch gekennzeichnet, dass** die Vertiefungen (7) in der Oberfläche des Gehäuses (2, 5) in dem ersten Arbeitsschritt unmittelbar beim Spritzvorgang hergestellt werden.

5. Verfahren nach einem der vorher gehenden Ansprüche,
**dadurch gekennzeichnet, dass** die Elemente (1) aus mehreren Einzelteilen (2, 5) bestehen, wobei die Einzelteile (2, 5) nach deren Herstellung in dem ersten Arbeitsschritt in dem zweiten Arbeitsschritt durch den Spritzvorgang mit dem zweiten Kunststoff miteinander verbunden werden (8).

## Claims

1. Manufacturing process for plastic elements (1) for electrical installation work, the elements (1) serving as a box for connecting electrical cables and/or for connecting electrical or electronic components to the cables, the cables being insertable into the interior of the box through cable insertion openings (6) and the surface of the elements (1) having markings that are test marks, quality marks or product descriptions, especially trademarks, and/or product-related logistics marks,
**characterised in that**, in a first step, the box (2, 5) is produced from one plastic by means of an injection process and that, in a second step, recesses (7) in the surface of the box (2, 5), which are of a shape corresponding to the markings, are filled with a second plastic by an injection process.

2. Process according to claim 1,
**characterised in that** the colour of the second plastic differs from that of the first plastic.

3. Process according to claim 1 or 2,
**characterised in that** the second plastic is more flexible than the first plastic and also serves, in the second step, to close off openings (6) left as cable insertion openings during production of the box (2, 5) in the first step.

4. Process according to one of the preceding claims,
**characterised in that** the recesses (7) in the surface of the box (2, 5) are created directly during the injection process in the first step.

5. Process according to one of the preceding claims,
**characterised in that** the elements (1) consist of a plurality of individual parts (2, 5) manufactured during the first step of the process, which are joined together (8) with the second plastic injected during the second step.

## Revendications

1. Procédé pour la fabrication d'éléments (1) en matière plastique pour installations électriques, les éléments (1) servant de boîtier pour la connexion de câbles électriques et/ou le raccordement d'éléments électrotechniques ou électroniques à des câbles, les câbles pouvant être introduits à l'intérieur du boîtier par des ouvertures d'introduction de câbles (6), la surface des éléments (1) comportant des marquages qui sont des marques de conformité, des marques de qualité ou des identifications de produit, notamment des marques et/ou des signes pour la logistique des produits, **caractérisé en ce que** dans une première étape le boîtier (2, 5) est fabriqué par un procédé d'injection à partir d'une première matière plastique, et **en ce que** dans une deuxième étape des empreintes (7), réalisées dans la surface du boîtier (2, 5) et correspondant à la structure des marquage, sont remplies par un procédé d'injection avec une deuxième matière plastique.

2. Procédé selon la revendication 1, **caractérisé en ce que** la deuxième matière plastique présente une coloration qui constitue un contraste coloré par rapport à la première matière plastique.

3. Procédé selon la revendication 1 ou 2, **caractérisé en ce que** la deuxième matière plastique présente par rapport à la première matière plastique une plus grande élasticité, et **en ce que** des ouvertures (6), qui avaient été laissées ouvertes lors de la fabrication du boîtier (2, 5) dans la première étape en tant qu'ouverture de passage de câbles, sont également fermées avec la deuxième matière plastique durant la deuxième étape.

4. Procédé selon l'une des revendications précédentes, **caractérisé en ce que** les empreintes (7) à la surface du boîtier (2, 5) sont fabriquées durant la première étape directement lors du procédé d'injection.

5. Procédé selon l'une des revendications précédentes, **caractérisé en ce que** les éléments (1) sont constitués de plusieurs pièces distinctes (2, 5), les pièces distinctes (2, 5), après leur fabrication durant la première étape, étant reliées entre elles (8) durant la deuxième étape avec la deuxième matière plastique par le procédé d'injection.
